# EUROPEAN PATENT APPLICATION

(11) **EP 3 745 333 A1**
(43) Date of publication of application: **02.12.2020**
(21) Application number: 19177290.4
(22) Date of filing: 29.05.2019
(51) Int. Cl.: G06Q 10/06, G06Q 50/04

(54) **METHOD AND SYSTEM FOR MANAGING A MANUFACTURING PROCESS IN A TECHNICAL INSTALLATION**

(71) Applicant: Siemens Aktiengesellschaft, 80333 München (DE)
(72) Inventor: MISHRA, Sanjay Kumar, 263139 Nainital, Uttarakhand (IN)
(74) Representative: Patentanwaltskanzlei WILHELM & BECK

(57) **Abstract**

A method (300) and system (100) for managing a manufacturing process in a technical installation (107) are provided. In one aspect, the method includes receiving one or more real-time parameters associated with at least one portion of the manufacturing process from one or more sensors deployed in the technical installation, wherein the manufacturing process corresponds to manufacturing of a product using the technical installation. The method further includes computing a quality associated with the product by analyzing the one or more real-time parameters associated with the at least one portion of the manufacturing process. Additionally, the method includes determining one or more parameters affecting the quality associated with the product based on a recipe associated with the product. Furthermore, the method includes dynamically reconfiguring at least a portion of the technical installation based on the determined parameters affecting the quality associated with the product.

## Description

The present invention relates to a method and system for managing a manufacturing process in a technical installation.

A technical installation or a manufacturing setup such as a food and beverages industry or a pharmaceutical industry or a chemical industry executes complex manufacturing processes of various products. Each such manufacturing process includes several elements such as raw materials, ingredients, technical components or equipment. Each of these elements must operate in defined manner so as to achieve the final output, i.e. the intended product. Manufacturing setups may face multiple challenges, such as managing an intended quality of a product. Poor quality of the end-product may increase recall rate of the products significantly, thereby impacting the throughput of the manufacturing setup. Additionally, poor quality of the product may also be detrimental to several consumers. Quality of a product may be dependent not just on the quality of the raw materials or ingredients used in the manufacturing process, but also on the components or equipment deployed in the technical installation for the manufacturing process.

Currently, quality of the product may be monitored as a separate process by choosing random samples of a finished product for quality analysis. However, such quality analysis is performed after the manufacturing process is completed. This affects throughput of the technical installation and also causes wastage of time and resources. Currently, there is no way to monitor the quality of the product on-the-fly during the manufacturing process.

Therefore, there is a need for a method and system that can determine the quality of a product on-the-fly such that necessary actions to improve the quality of the product may be taken early-on in the manufacturing process.

The object of the invention is therefore to provide a method and a system for managing a manufacturing process in a technical installation that is capable of monitoring the quality of a product on-the-fly thereby increasing the accuracy and efficiency of the output of the manufacturing process.

The object of the invention is solved by a method of managing a manufacturing process in a technical installation as claimed in claim 1, a system as claimed in claim 10, 11 and 12, a computer program product as claimed in claim 13 and a computer readable medium as claimed in claim 14 which manages a manufacturing process in a technical installation.

In the following, the solution according to the invention is described with respect to the claimed system as well as with respect to the claimed method. Features, advantages or alternative embodiments herein can be assigned to the other claimed objects and vice versa. In other words, claims for the system can be improved with features described or claimed in the context of the method. In this case, the functional features of the method are embodied by objective units of the system.

Based on the abovementioned method, the invention achieves the object by dynamically reconfiguring at least one portion of the technical installation based on parameters affecting a quality of a product. An advantage of the invention is that the quality of the product is determined during the manufacturing process. Therefore, the need to wait until the final product is manufactured for performing quality analysis is eliminated. Yet another advantage of the invention is that quality of the end product meets standard requirements that may be defined for the manufacturing process. Another advantage of the invention is that wastage of resources such as raw materials and time is reduced.

The present invention describes a method of managing a manufacturing process in a technical installation. The method includes a step of receiving one or more real-time parameters associated with at least one portion of the manufacturing process. In an embodiment, the manufacturing process corresponds to manufacture of a product. The product may be for example, food and condiments, chemicals, beverages, pharmaceutical drugs, etc. The one or more real-time parameters may be, for example, type of raw material used in the manufacturing process, quantity of the raw material used, physical parameters such as temperature, pressure, humidity, components involved in the manufacturing process, etc. Such one or more parameters may be received from one or more sensors deployed in the industrial installation. The sensors may include, for example, temperature sensor, pressure sensor, vibration sensor, etc. Receiving one or more real-time parameters from the one or more sensors enables identification of real-time status of the manufacturing process. The method further includes computing a quality associated with the product by analyzing one or more real-time parameters associated with the at least one portion of the manufacturing process. The computed quality may be the real-time quality of the product during the manufacturing process. In an embodiment, the one or more real-time parameters may be analyzed to identify the real-time quality of the product being manufactured. For example, the analysis of the one or more real-time parameters may include predicting an outcome of the manufacturing process if the one or more real-time parameters are maintained until a completion of the manufacturing process.

The method also includes a step of determining one or more parameters affecting the quality associated with the product based on a recipe associated with the product. In an embodiment, the one or more real-time parameters may affect the quality of the product if such parameters may not match with a recipe associated with the product. A recipe may include a plurality of instructions based on which a product may be manufactured. Such instructions may include information such as, but not limited to, raw material/ingredients required for manufacturing the product, one or more physical parameters associated with the manufacturing process, duration of the manufacturing process, one or more components of the technical installation involved in the manufacturing process. If one or more real-time parameters may not match with the one or more parameters associated with the recipe, the quality of the product may deviate from a required standard. Therefore, such one or more parameters associated with the real-time manufacturing process are determined which may deviate from the recipe associated with the product. The method further includes dynamically reconfiguring at least a portion of the technical installation based on the determined parameters affecting the quality associated with the product. Reconfiguration of the at least one portion of the technical installation may include, but not be limited to, modifying the ingredients/raw materials of the manufacturing process, modifying a quantity of the ingredients/raw materials associated with the manufacturing process, reconfiguring physical parameters associated with the manufacturing process and/or reconfiguring one or more components of the technical installation associated with the manufacturing process. Such reconfiguration may be performed dynamically by a processing unit associated with the technical installation. Advantageously, reconfiguring at least one portion of the technical installation enables managing the quality of the product during the manufacturing process. Therefore, wastage of resources and time is reduced. Another advantage is that efficiency of the manufacturing process is increased. The method further includes manufacturing the product using the manufacturing process upon reconfiguring the at least one portion of the technical installation. Advantageously, manufacturing the product upon reconfiguring the at least one portion of the technical installation enables the product to be of an expected quality standard.

According to an embodiment, computing the quality associated with the product includes simulating the one or more real-time parameters associated with the at least one portion of the manufacturing process. In an embodiment, such simulation may be performed using a virtual model of the technical installation. The virtual model may be, for example, a digital twin of the technical installation that is capable of simulating the functions of the technical installation. In another embodiment, such virtual model may be based in a cloud environment. In such an embodiment, all data associated with the functioning of the technical installation may be stored in the cloud environment. Such data may be used by the virtual model to simulate the functions of the technical installation. In an embodiment, simulating the one or more real-time parameters associated with the at least one portion of the manufacturing process may include replication of the one or more real-time parameters to identify an outcome of the manufacturing process. The method further includes determining the outcome of the at least one manufacturing process based on the simulated one or more real-time parameters. Such outcome may reflect the quality of the product. The virtual model may perform, for example, a predictive analysis based on archived data associated with the manufacturing process and real-time information received from the technical installation. The predictive analysis may be based on patterns identified from the archived data. Advantageously, simulation of the functions of the technical installation enables timely identification of appropriate mitigation actions if a deviation in the preferred quality of the product is identified. The use of a virtual model further enables effective utilization of time and resources, thereby preventing wastage of effort in implementing an incorrect manufacturing process in the technical installation. Therefore, the virtual model allows for prediction of the outcome of the manufacturing process before such manufacturing process is completed in the technical installation in real-time.

According to another embodiment, determining one or more parameters affecting the quality associated with the product includes receiving the recipe associated with the product. The recipe may include one or more parameters associated with the manufacturing process that enables manufacturing of a product of a desired/expected quality. The method further includes comparing one or more parameters associated with the recipe with the one or more real-time parameters associated with the at least one portion of the manufacturing process. The one or more real-time parameters may be mapped to the one or more parameters in the recipe. Such mapping enables identification of possible deviations in the one or more real-time parameters associated with the at least one portion of the manufacturing process. The method further includes identifying if the one or more real-time parameters associated with the at least one portion of the manufacturing process deviates from the one or more parameters associated with the recipe. In an embodiment, the virtual model may enable identification of such deviation.

Based on the identified deviation, the one or more parameters affecting the quality associated with the product may be identified. Advantageously, accurate identification of the one or more parameters affecting the quality enables efficient management of the manufacturing process. Therefore, the one or more parameters associated with the manufacturing process may be reconfigured or corrected during the manufacturing process. This enables efficient management of time and resources.

According to yet another embodiment, dynamically reconfiguring the at least one portion of the technical installation includes simulating the one or more parameters associated with the recipe. In an embodiment, the virtual model may be used to simulate the one or more parameters associated with the recipe. This enables determination of an expected quality associated with the product. Such expected quality may be a standard quality associated with the product that may be required to be replicated in the product each time the product is manufactured. The quality parameters associated with the product may vary depending on the type of product manufactured. For example, in a food and beverage industry, the quality parameters may include taste of the product, color of the product, fermentation level, nutrition value, amount/quantity of specific components in the product, contaminants, etc. For example, in a pharmaceutical industry, the quality parameters may include quantity/amount of impurities in the product, stability of the product, efficacy, quantity of residual substances, etc. For example, in a chemical industry, the quality parameters may include pH, chemical composition, humidity, dissolved oxygen, etc. One or more of the abovementioned parameters may be analyzed to determine the expected quality of the product being manufactured. The method further includes identifying if the at least one portion of the technical installation is to be reconfigured based on the expected quality associated with the product. Such reconfiguration may be required, for example, if the current quality of the product may not match with the expected quality associated with the product. In an embodiment, the reconfiguration may include modifying one or more parameters associated with the manufacturing process. For example, reconfiguration may include one or more of modifying a quantity of the one or more ingredients/raw materials associated with the product, modifying the physical parameters associated with the manufacturing process, modifying the components associated with the manufacturing process. The method further includes reconfiguring the at least one portion of the technical installation, if the at least one portion of the technical installation is to be reconfigured. Such reconfiguration may be performed dynamically by a processing unit, thereby eliminating a need for human intervention. In an alternate embodiment, a notification may be generated on a graphical user interface of a human machine interface associated with the technical installation if reconfiguration of at least one portion of the technical installation is identified. In yet another embodiment, a notification may be generated on the graphical user interface of the human machine interface associated with the technical installation once the reconfiguration has been performed. Advantageously, dynamic reconfiguration of the technical installation enables efficient management of manufacturing process. Any error in the manufacturing process is identified on the fly, thereby eliminating the need for the end product to be ready. Dynamic reconfiguration also advantageously enables minimal interference of a user of the technical installation in the manufacturing process.

According to a further embodiment, the reconfigured parameters associated with the at least one reconfigured portion of the manufacturing process are simulated. Such simulation may be performed using the virtual model in the cloud environment.

The method further includes determining an outcome of the simulation of the reconfigured parameters. Such outcome may correspond to a reconfigured quality of the product. Once the one or more parameters associated with the manufacturing process are reconfigured, the quality associated with the product may also be reconfigured. Such reconfigured quality associated with the product may be different over the initially identified quality of the product. Therefore, simulating the reconfigured parameters enables efficient identification of whether the reconfigured quality of the product meets the expected quality of the product based on the recipe. The method further includes determining if the reconfigured quality meets the expected quality associated with the recipe of the product. If the reconfigured quality may not meet the expected quality associated with the recipe, the at least one portion of the technical installation is dynamically reconfigured. Such reconfiguration may be performed to meet the expected quality associated with the product. In an embodiment, reconfiguration may be performed for at least one portion of the technical installation until the expected quality associated with the product is met. In another embodiment, after reconfiguration, if the quality of the product is higher than the expected quality, the one or more parameters associated with recipe are modified according to the reconfigured one or more parameters associated with the technical installation. Advantageously, simulation of the reconfigured parameters enables verification of the reconfigured parameters to achieve the expected quality associated with the product.

According to another embodiment, the method further comprises providing one or more recommendations to manage the quality associated with the product based on the determined outcome of the simulation of the one or more real-time parameters associated with the manufacturing process. In an embodiment, one or more recommendation may be provided to the user of the technical installation to manage the quality associated with the product. Such recommendations may include mitigation actions that may be performed to achieve the expected quality associated with the product. In an embodiment, the recommendations may be provided to the user on a graphical user interface of the human machine interface of the technical installation. The recommendations may also indicate a range of improvement in the quality associated with the product if a certain mitigation action is performed. Advantageously, the recommendations provide inputs to the user of the technical installation on the measures to be taken to improve the quality of the product.

According to an embodiment, the manufacturing process corresponds to a manufacturing process in a food and beverages industry, a pharmaceutical industry and/or a chemical industry.

The invention relates in one aspect to a system for managing a manufacturing process in a technical installation. The system includes one or more processing units, a database, and a memory communicatively coupled to the one or more processing units. The memory includes a process control module that may be configured to perform the method steps of managing a manufacturing process in a technical installation.

According to an embodiment, the process control module is configured to receive one or more real-time parameters associated with at least one portion of the manufacturing process. In an embodiment, the manufacturing process corresponds to manufacture of a product. The product may be for example, food and condiments, chemicals, beverages, pharmaceutical drugs, etc. The one or more real-time parameters may be, for example, type of raw material used in the manufacturing process, quantity of the raw material used, physical parameters such as temperature, pressure, humidity, components involved in the manufacturing process, etc. Such one or more parameters may be received from one or more sensors deployed in the industrial installation. The sensors may include, for example, temperature sensor, pressure sensor, vibration sensor, etc. Receiving one or more real-time parameters from the one or more sensors enables identification of real-time status of the manufacturing process. The process control module is further configured to compute a quality associated with the product by analyzing one or more real-time parameters associated with the at least one portion of the manufacturing process. The computed quality may be the real-time quality of the product during the manufacturing process. In an embodiment, the one or more real-time parameters may be analyzed by the process control module to identify the real-time quality of the product being manufactured. For example, the analysis of the one or more real-time parameters may include predicting an outcome of the manufacturing process if the one or more real-time parameters are maintained until a completion of the manufacturing process.

The process control module is configured to determine one or more parameters affecting the quality associated with the product based on a recipe associated with the product. In an embodiment, the one or more real-time parameters may affect the quality of the product if such parameters may not match with a recipe associated with the product. A recipe may include a plurality of instructions based on which a product may be manufactured. Such instructions may include information such as, but not limited to, raw material/ingredients required for manufacturing the product, one or more physical parameters associated with the manufacturing process, duration of the manufacturing process, one or components of the technical installation involved in the manufacturing process. If one or more real-time parameters may not match with the one or more parameters associated with the recipe, the quality of the product may deviate from a required standard. Therefore, such one or more parameters associated with the real-time manufacturing process which may deviate from the recipe associated with the product are determined.

The process control module is further configured to dynamically reconfigure at least a portion of the technical installation based on the determined parameters affecting the quality associated with the product. Reconfiguration of the at least one portion of the technical installation may include, but not be limited to, modifying the ingredients/raw materials of the manufacturing process, modifying a quantity of the ingredients/raw materials associated with the manufacturing process, reconfiguring physical parameters associated with the manufacturing process and/or reconfiguring one or more components of the technical installation associated with the manufacturing process. Such reconfiguration may be performed dynamically by a processing unit associated with the technical installation. Advantageously, reconfiguring at least one portion of the technical installation enables managing the quality of the product during the manufacturing process. Therefore, wastage of resources and time is reduced. Another advantage is that efficiency of the manufacturing process is increased. The process control module is further configured to manufacture the product using the manufacturing process upon reconfiguring the at least one portion of the technical installation. Advantageously, manufacturing the product upon reconfiguring the at least one portion of the technical installation enables the product to be of an expected quality standard.

According to an embodiment, in computing the quality associated with the product, the process control module is configured to simulate the one or more real-time parameters associated with the at least one portion of the manufacturing process. In an embodiment, such simulation may be performed using a virtual model of the technical installation. The virtual model may be, for example, a digital twin of the technical installation that is capable of simulating the functions of the technical installation. In another embodiment, such virtual model may be based in a cloud environment. In such an embodiment, all data associated with the functioning of the technical installation may be stored in the cloud environment. Such data may be used by the virtual model to simulate the functions of the technical installation. In an embodiment, simulating the one or more real-time parameters associated with the at least one portion of the manufacturing process may include replication of the one or more real-time parameters to identify an outcome of the manufacturing process. The process control module is further configured to determine the outcome of the at least one manufacturing process based on the simulated one or more real-time parameters. Such outcome may reflect the quality of the product. The virtual model may perform, for example, a predictive analysis based on archived data associated with the manufacturing process and real-time information received from the technical installation. The predictive analysis may be based on patterns identified from the archived data. Advantageously, simulation of the functions of the technical installation enables timely identification of appropriate mitigation actions if a deviation in the preferred quality of the product is identified. The use of a virtual model further enables effective utilization of time and resources, thereby preventing wastage of effort in implementing an incorrect manufacturing process in the technical installation. Therefore, the virtual model allows for prediction of the outcome of the manufacturing process before such manufacturing process is completed in the technical installation in real-time.

According to another embodiment, in determining one or more parameters affecting the quality associated with the product, the process control module is configured to receive the recipe associated with the product. The recipe may include one or more parameters associated with the manufacturing process that enables manufacturing of a product of a desired/expected quality. The process control module is further configured to compare one or more parameters associated with the recipe with the one or more real-time parameters associated with the at least one portion of the manufacturing process. The one or more real-time parameters may be mapped to the one or more parameters in the recipe. Such mapping enables identification of possible deviations in the one or more real-time parameters associated with the at least one portion of the manufacturing process. The process control module is further configured to identify if the one or more real-time parameters associated with the at least one portion of the manufacturing process deviates from the one or more parameters associated with the recipe. In an embodiment, the virtual model may enable identification of such deviation. Based on the identified deviation, the one or more parameters affecting the quality associated with the product may be identified. Advantageously, accurate identification of the one or more parameters affecting the quality enables efficient management of the manufacturing process. Therefore, the one or more parameters associated with the manufacturing process may be reconfigured or corrected during the manufacturing process. This enables efficient management of time and resources.

According to yet another embodiment, in dynamically reconfiguring the at least one portion of the technical installation, process control module is configured to simulate the one or more parameters associated with the recipe. In an embodiment, the virtual model may be used to simulate the one or more parameters associated with the recipe. This enables determination of an expected quality associated with the product. Such expected quality may be a standard quality associated with the product that may be required to be replicated in the product each time the product is manufactured. The quality parameters associated with the product may vary depending on the type of product manufactured. For example, in a food and beverage industry, the quality parameters may include taste of the product, colour of the product, fermentation level, nutrition value, amount/quantity of specific components in the product, contaminants, etc. For example, in a pharmaceutical industry, the quality parameters may include quantity/amount of impurities in the product, stability of the product, efficacy, quantity of residual substances, etc. For example, in a chemical industry, the quality parameters may include pH, chemical composition, humidity, dissolved oxygen, etc. One or more of the abovementioned parameters may be analyzed to determine the expected quality of the product being manufactured. The process control module is further configured to identify if the at least one portion of the technical installation is to be reconfigured based on the expected quality associated with the product. Such reconfiguration may be required, for example, if the current quality of the product may not match with the expected quality associated with the product. In an embodiment, the reconfiguration may include modifying one or more parameters associated with the manufacturing process. For example, reconfiguration may include one or more of modifying a quantity of the one or more ingredients/raw materials associated with the product, modifying the physical parameters associated with the manufacturing process, modifying the components associated with the manufacturing process. The process control module is further configured to reconfigure the at least one portion of the technical installation, if the at least one portion of the technical installation is to be reconfigured. Such reconfiguration may be performed dynamically by the processing unit, thereby eliminating a need for human intervention. In an alternate embodiment, a notification may be generated on a graphical user interface of a human machine interface associated with the technical installation if reconfiguration of at least one portion of the technical installation is identified. In yet another embodiment, a notification may be generated on the graphical user interface of the human machine interface associated with the technical installation once the reconfiguration has been performed. Advantageously, dynamic reconfiguration of the technical installation enables efficient management of manufacturing process. Any error in the manufacturing process is identified on the fly, thereby eliminating the need for the end product to be ready. Dynamic reconfiguration also advantageously enables minimal interference of a user of the technical installation in the manufacturing process.

According to a further embodiment, the reconfigured parameters associated with the at least one reconfigured portion of the manufacturing process are simulated. Such simulation may be performed using the virtual model in the cloud environment. The process control module is configured to determine an outcome of the simulation of the reconfigured parameters. Such outcome may correspond to a reconfigured quality of the product. Once the one or more parameters associated with the manufacturing process are reconfigured, the quality associated with the product may also be reconfigured. Such reconfigured quality associated with the product may be different over the initially identified quality of the product. Therefore, simulating the reconfigured parameters enables efficient identification of whether the reconfigured quality of the product meets the expected quality of the product based on the recipe. The process control module is further configured to determine if the reconfigured quality meets the expected quality associated with the recipe of the product. If the reconfigured quality may not meet the expected quality associated with the recipe, the at least one portion of the technical installation is dynamically reconfigured. Such reconfiguration may be performed to meet the expected quality associated with the product. In an embodiment, reconfiguration may be performed for at least one portion of the technical installation until the expected quality associated with the product is met. In another embodiment, after reconfiguration, if the quality of the product is higher than the expected quality, the one or more parameters associated with recipe are modified according to the reconfigured one or more parameters associated with the technical installation. Advantageously, simulation of the reconfigured parameters enables verification of the reconfigured parameters to achieve the expected quality associated with the product.

According to another embodiment, the process control module is further configured to provide one or more recommendations to manage the quality associated with the product based on the determined outcome of the simulation of the one or more real-time parameters associated with the manufacturing process. In an embodiment, one or more recommendation may be provided to the user of the technical installation to manage the quality associated with the product. Such recommendations may include mitigation actions that may be performed to achieve the expected quality associated with the product. In an embodiment, the recommendations may be provided to the user on a graphical user interface of the human machine interface of the technical installation. The recommendations may also indicate a range of improvement in the quality associated with the product if a certain mitigation action is performed. Advantageously, the recommendations provide inputs to the user of the technical installation on the measures to be taken to improve the quality of the product.

According to an embodiment, the manufacturing process corresponds to a manufacturing process in a food and beverages industry, a pharmaceutical industry and/or a chemical industry.

The invention also relates to a system comprising one or more servers remotely located from a technical installation. The system further comprises one or more sensors communicatively coupled to the one or more servers and one or more user devices communicatively coupled to the one or more servers. The one or more servers comprise computer readable instructions, which when executed by the one or more servers cause the one or more servers to perform the method according to claims 1 to 9.

The invention also relates in one aspect to a process control system for operation of a process plant. The process control system comprises a system as claimed in claim 10.

The invention relates in one aspect to a computer program product comprising a computer program, the computer program being loadable into a storage unit of a system, including program code sections to make the system execute the method according to an aspect of the invention when the computer program is executed in the system.

The invention relates in one aspect to a computer-readable medium, on which program code sections of a computer program are saved, the program code sections being loadable into and/or executable in a system to make the system execute the method according to an aspect of the invention when the program code sections are executed in the system.

The realization of the invention by a computer program product and/or a computer-readable medium has the advantage that already existing management systems can be easily adopted by software updates in order to work as proposed by the invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The present invention is further described hereinafter with reference to illustrated embodiments shown in the accompanying drawings, in which:
- FIG 1: is a schematic representation of s technical installation, according to a first embodiment.
- FIG 2: is a block diagram of a cloud platform as shown in FIG 1, according to the first embodiment.
- FIG 3: illustrates a flowchart of a method of managing a manufacturing process in a technical installation, according to an embodiment.
- FIG 4: illustrates a flowchart of a method of computing the quality associated with the product, according to an embodiment.
- FIG 5: illustrates a flowchart of a method of determining one or more parameters affecting the quality associated with the product, according to an embodiment.
- FIG 6: illustrates a flowchart of a method of dynamically reconfiguring at least one portion of the technical installation, according to an embodiment.
- FIG 7: illustrates a flowchart of a method of managing a manufacturing process in a technical installation, according to another embodiment.
- FIG 8: illustrates a flowchart of a method of manufacturing the product based on the recommendations, according to an embodiment.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

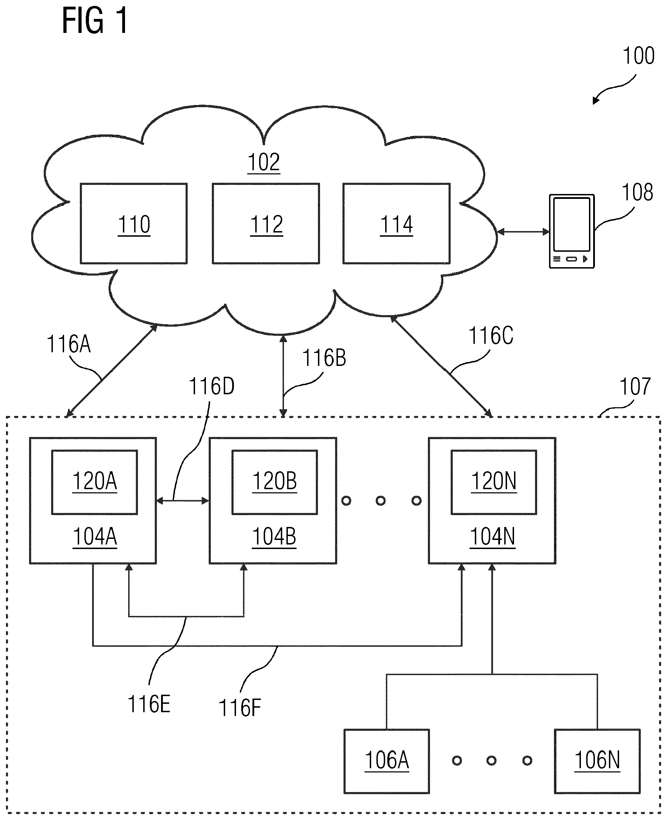

FIG 1 is a schematic representation of an industrial set-up 100, according to a first embodiment. The industrial set-up 100 comprises a cloud platform 102, one or more technical installations 107 connected to the cloud platform 102, and a user device 108 associated with a user of the technical installation 107. The technical installation 107 can be an industrial setup such as manufacturing facility, etc. The technical installation 107 may be geographically distributed. Each of the technical installations 107 may comprise several devices or components 104A-N. The components 104A-N may include different types of assets (equipment, machines, sensors, actuators, etc.) located in the technical installation 107. Each of the components 104A-N is capable of communicating with the cloud platform 102 using respective communication interfaces 120A-N via communication links 116A-C via the Internet or a network. Also, the components 104A-N are capable of communicating with each other using respective communication interfaces 120A-N via communication links 116D to 116F. The communication links 116D to 116F can be wired or wireless links.

Also, in the technical installation 107, the one or more components 104N may be connected to assets 106A-N in the technical installation 107. Such assets 106A-N are not capable of directly communicating with the cloud platform 102. As shown in FIG. 1, the component 104N is connected to assets 106A-N via wired or wireless network. For example, the component 104N is an IoT gateway and the assets 106A-N may be robots, sensors, actuators, machines, or other field devices which communicate to the cloud platform 102 via the IoT gateway 104N.

Each of the components 104A-N is configured for communicating with the cloud platform 102 via the communication interfaces 120A-N. The components 104A-N may have an operating system and at least one software program for performing desired operations in the technical installation 107. Also, the components 104A-N may run software applications for collecting, and preprocessing plant data (process data) and transmitting the preprocessed data to the cloud platform 102.

The cloud platform 102 can be a cloud infrastructure capable of providing cloud-based services such as data storage services, data analytics services, data visualization services, etc. based on the plant data. The cloud platform 102 can be part of public cloud or a private cloud. The cloud platform 102 may enable data scientists/software vendors to provide software applications/firmware as a service, thereby eliminating a need for software maintenance, upgrading, and backup by the users. The software application can be full application, or software patch.

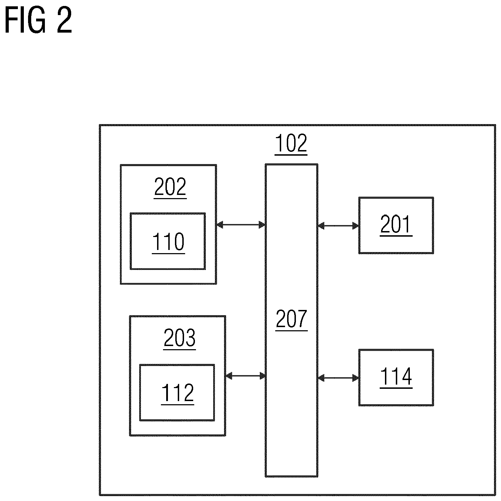

The cloud platform 102 is further illustrated in greater detail in FIG 2. Referring to FIG 2, the cloud platform comprises a processing unit 201, a memory 202, a storage unit 203, a network interface 114, a standard interface or bus 207. The cloud platform 102 may be an exemplary embodiment of a system. The system 102 can be a (personal) computer, a workstation, a virtual machine running on host hardware, a microcontroller, or an integrated circuit. As an alternative, the system 102 can be a real or a virtual group of computers (the technical term for a real group of computers is "cluster", the technical term for a virtual group of computers is "cloud").

The processing unit 201, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 201 may also include embedded controllers, such as generic or programmable logic devices or arrays, application specific integrated circuits, single-chip computers, and the like. In general, a processing unit 201 can comprise hardware elements and software elements. The processing unit 201 can be configured for multithreading, i.e. the processing unit 201 can host different calculation processes at the same time, executing the either in parallel or switching between active and passive calculation processes.

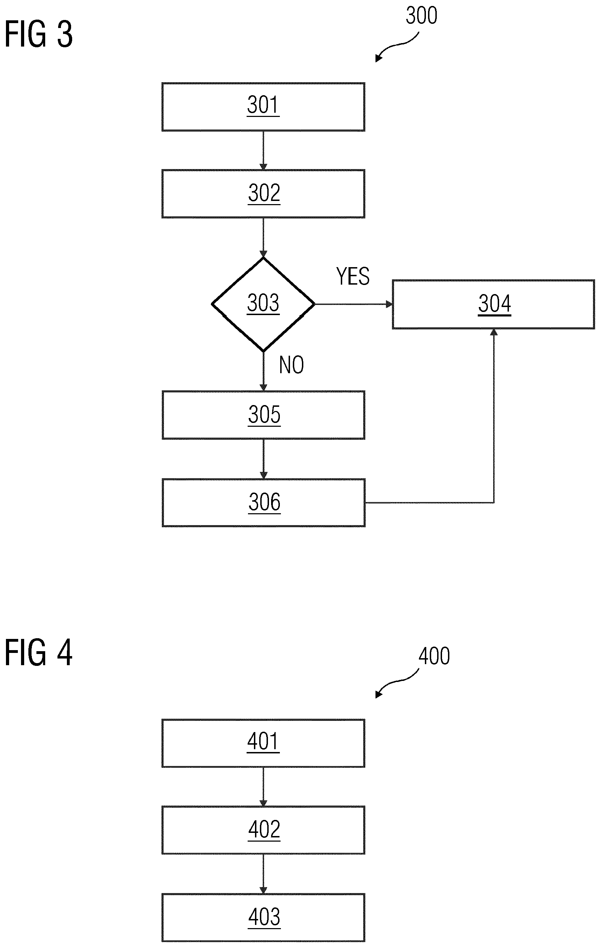

The memory 202 may be volatile memory and non-volatile memory. The memory 202 may be coupled for communication with the processing unit 201. The processing unit 201 may execute instructions and/or code stored in the memory 202. A variety of computer-readable storage media may be stored in and accessed from the memory 202. The memory 202 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 202 includes a process control module 110 stored in the form of machine-readable instructions on any of the above-mentioned storage media and may be in communication to and executed by processing unit 201. When executed by the processing unit 201, the process control module 110 causes the processing unit 201 to manage a manufacturing process in the technical installation 107. The process control module 110 may further cause the processing unit to simulate an outcome of one or more parameters associated with the technical installation. Method steps executed by the processing unit 201 to achieve the abovementioned functionality are elaborated upon in detail in FIG 3, 4, 5, 6, 7 and 8.

The storage unit 203 may be a non-transitory storage medium which stores a technical database 112. The technical database 112 may store an event history of the one or more components 104A-N in the technical installation 107. The bus 207 acts as interconnect between the processing unit 201, the memory 202, the storage unit 203, and the network interface 114.

Those of ordinary skill in the art will appreciate that the hardware depicted in FIG 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

A system in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows™, a product of Microsoft Corporation located in Redmond, Washington may be employed if suitably modified. The operating system is modified or created in accordance with the present disclosure as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

Disclosed embodiments provide systems and methods for managing a manufacturing process in a technical installation. In particular, the systems and methods may identify the quality of the product during the manufacturing process in the technical installation.

FIG 3 illustrates a flowchart of a method 300 of managing a manufacturing process in a technical installation 107. The method 300 includes a step 301 of receiving one or more real-time parameters associated with at least one portion of the manufacturing process in the technical installation 107. Such real-time parameters may be obtained from one or more sensors 106A-N deployed in the technical installation 107. The one or more sensors 106A-N may capture one or more parameters associated with the manufacturing process. Such one or more parameters include physical parameters such as temperature, pressure, humidity, flow, etc. The one or more parameters may also include quantity and quality of raw material/ingredient used in the manufacturing of the product. In an exemplary embodiment, the technical installation 107 is associated with a food and beverages industry, in particular a biscuit manufacturing industry. Therefore, the one or more sensors 106A-N capture one or more real-time parameters such as, but not limited to, dough characteristics, temperature of the dough, quantity of the dough used for the manufacture of biscuits, composition of the dough, temperature at which the dough is baked, color of the baked product, taste of the baked product. At step 302, a quality associated with the product is computed by analyzing the one or more real-time parameters associated with the at least one portion of the manufacturing process. The method of computing the quality associated with the product is discussed in greater detail in FIG 4. Referring to FIG 4, the method 400 includes a step 401 of receiving one or more real-time parameters associated with the at least one portion of the manufacturing process from the one or more sensors deployed in the technical installation 107. At step 402, the one or more real-time parameters are simulated using a virtual model. In an embodiment, the virtual model is a digital twin of the technical installation 107 that is capable of simulating one or more functions of the technical installation 107. The virtual model may have access to all data associated with the technical installation 107 based on which replication of one or more functions may be performed by the virtual model. Simulating one or more real-time parameters associated with the at least portion of the manufacturing process enables identification of a real-time quality of the product. Therefore, advantageously, necessary actions may be taken during the manufacturing process to adjust the quality of the product to an expected quality. At step 403, an outcome of the at least one manufacturing process is determined based on the simulated one or more real-time parameters. Such outcome reflects the real-time quality of the product being manufactured. In an embodiment, the outcome may include the real-time performance of the manufacturing process, the characteristics associated with the product being manufactured, an extent of deviation from a standard quality/expected quality, etc.

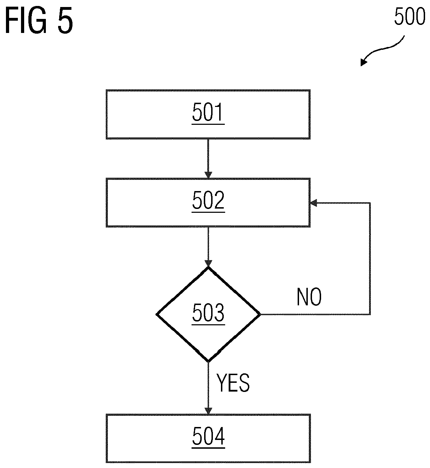

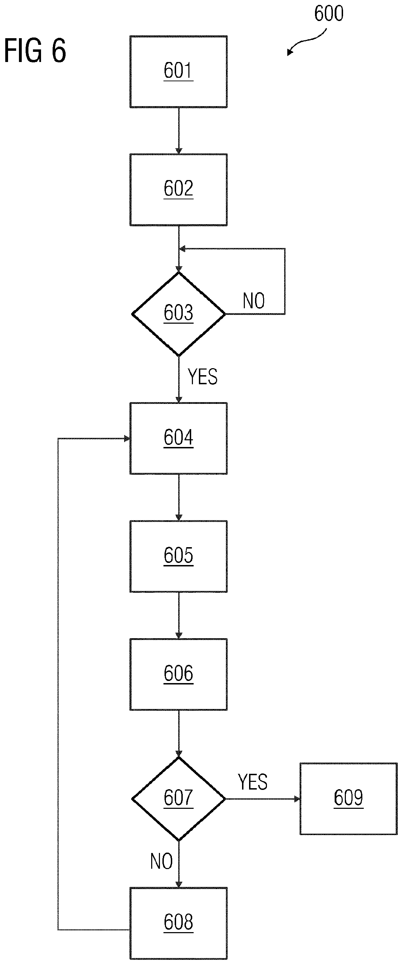

Referring back to FIG 3, at step 303, a determination is made if the computed quality associated with the product matches with the expected quality associated with the product. If the computed quality matches with the expected quality, the manufacturing process is continued at step 304 to manufacture the product. If the computed quality deviates from the expected quality associated with the product, at step 305, one or more parameters affecting the quality associated with the product are identified based on a recipe associated with the product. In an embodiment, the recipe is a set of instructions that are to be followed for the manufacturing process of a product. The recipe includes data associated with one or more raw materials/ingredients required for the manufacturing process, one or more parameters associated with the manufacturing process, steps to be followed for the manufacturing of the product, one or more components involved in the manufacturing process, etc. The recipe associated with the manufacturing process may be stored in the technical database 112. The one or more parameters in the recipe may be compared with the real-time one or more parameters associated with the manufacturing process to determine factors that may affect the quality associated with the product. The method steps describing how one or more parameters affecting the quality of the product is determined is elaborated in detail in FIG 5. The method 300 further includes a step 306 of dynamically reconfiguring at least a portion of the technical installation 107 based on the determined parameters affecting the quality of the product. In an embodiment, reconfiguration of the at least portion of the technical installation 107 includes modifying one or more parameters associated with the manufacturing process. Such one or more parameters may include quantity of the ingredients/raw materials, physical parameters such as temperature, pressure, humidity, flow, etc., time duration of an act associated with the manufacturing process, etc. Method steps elaborating the dynamic reconfiguration of the at least one portion of the technical installation has been described in greater detail in FIG 6. Once the at least one portion of the technical installation 107 has been reconfigured, the manufacturing process is continued at step 304 to manufacture the product.

FIG 5 illustrates a flowchart of a method 500 of determining one or more parameters affecting the quality associated with the product. At step 501, the recipe associated the product is received. One or more expected parameters associated with the at least portion of the manufacturing process is extracted from the recipe. At step 502, a comparison is made between the one or more parameters associated with the recipe with the one or more real-time parameters associated with the at least one portion of the manufacturing process. Such comparison may be made using the virtual model. The comparison is made to identify if there exist any deviations between the one or more parameters associated with the recipe and the one or more real-time parameters associated with the at least one portion of the manufacturing process. At step 503, a determination of existence of a deviation between the parameters is made. If a deviation is identified, at step 504, the one or more parameters affecting the quality associated with the product are identified based on the deviation.

FIG 6 illustrates a flowchart of a method of dynamically reconfiguring at least one portion of the technical installation 107, according to an embodiment. At step 601, one or more parameters associated with the recipe are simulated. Such simulation may be performed using the virtual model. The simulation of one or more parameters associated with the recipe enables identification of the expected quality of the product. The virtual model is capable of aggregating the data associated with the recipe, analyzing the one or more parameters associated with the recipe and provide insight on how an ideal manufacturing process may be executed to achieve the expected product quality. At step 602, the expected quality associated with the product is identified from the simulation. At step 603, a determination is made if at least one portion of the technical installation 107 is to be reconfigured based on the expected quality associated with the product. Such determination is made by identifying a deviation that may exist between the expected quality of the product and the real-time quality of the product. If the at least one portion of the technical installation 107 is to be reconfigured, at step 604 such reconfiguration is performed. At step 605, the reconfigured parameters associated with the at least one portion of the technical installation 107 are simulated using the virtual model. Simulating the one or more reconfigured parameters enables determining whether the expected quality associated with the product can be achieved. If reconfigured portion of the manufacturing process may not yield an outcome as expected with regard to product quality, executing the manufacturing process with reconfigured portion of the technical installation 107 may be detrimental to the technical installation 107 and/or to the final quality of the product. Therefore, simulating the reconfigured parameters associated with the reconfigured portion of the technical installation 107 enables efficient and timely identification of the outcome of the manufacturing process without actual execution on the technical installation 107. At step 606, a comparison is made between the outcome of the simulation of reconfigured parameters and the expected outcome associated with the recipe of the product. At 607, a determination is made if the reconfigured quality meets the expected quality associated with the recipe. If the expected quality is met, at step 609, the manufacturing process is continued to manufacture the product based on the reconfigured portion of the technical installation. If the expected quality is not met, at step 608, the at least one portion of the technical installation 107 is reconfigured.

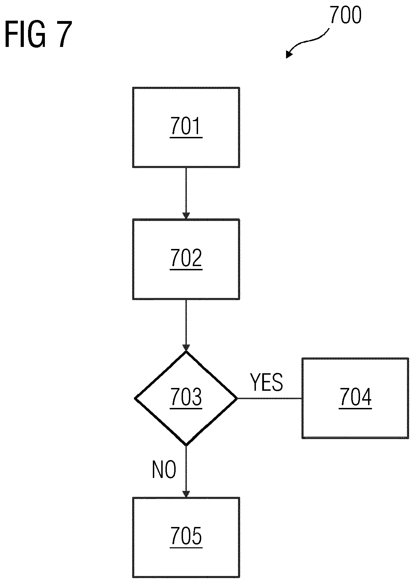

FIG 7 illustrates a flowchart of a method 700 of managing a manufacturing process in a technical installation 107, according to another embodiment. The method 700 includes a step 701 of receiving one or more real-time parameters associated with at least one portion of the manufacturing process in the technical installation 107. Such real-time parameters may be obtained from one or more sensors 106A-N deployed in the technical installation 107. The one or more sensors 106A-N may capture one or more parameters associated with the manufacturing process. Such one or more parameters include physical parameters such as temperature, pressure, humidity, flow, etc. The one or more parameters may also include quantity and quality of raw material/ingredient used in the manufacturing of the product. In an exemplary embodiment, the technical installation 107 is associated with a food and beverages industry, in particular a biscuit manufacturing industry. Therefore, the one or more sensors 106A-N capture one or more real-time parameters such as, but not limited to, dough characteristics, temperature of the dough, quantity of the dough used for the manufacture of biscuits, composition of the dough, temperature at which the dough is baked, color of the baked product, taste of the baked product. At step 702, a quality associated with the product is computed by analyzing the one or more real-time parameters associated with the at least one portion of the manufacturing process. At step 703, a determination is made if the computed quality associated with the product matches with the expected quality associated with the product. If the computed quality matches with the expected quality, the manufacturing process is continued at step 704 to manufacture the product. If the computed quality deviates from the expected quality associated with the product, at step 705, one or more recommendations are provided to a user of the technical installation 107. In an embodiment, such one or more recommendations may be presented on a graphical user interface of a human machine interface associated with the technical installation 107. Alternatively, such recommendations may also be displayed on a graphical user interface of the user device 108 associated with the user of the technical installation 107. The recommendations may include one or more suggestive actions to the user of the technical installation 107 that may be executed in the technical installation 107 to achieve the expected quality associated with the product. For example, the recommendations may include one or more parameters in the technical installation 107 that may be reconfigured.

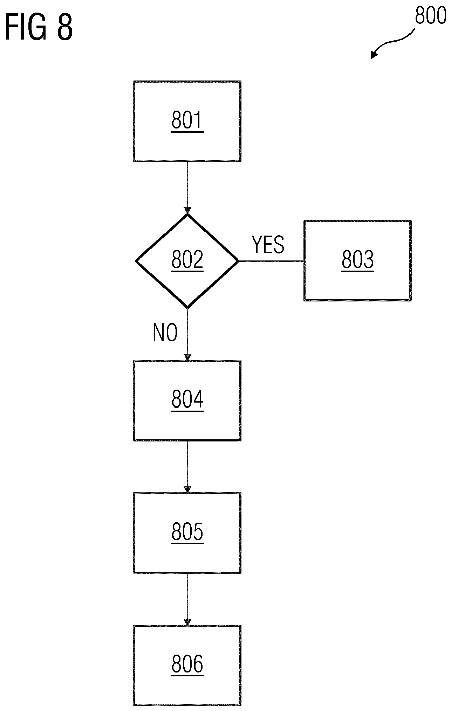

FIG 8 illustrates a flowchart of a method 800 of manufacturing a product based on the recommendations, according to an embodiment. The method 800 includes a step 801 of querying the user of the technical installation 107 for a recommendation choice. The user of the technical installation 107 may choose one or more recommendations that are to be executed on the technical installation 107. Such one or more recommendations may be chosen by the user from the graphical user interface of the technical installation 107 or of the user device 108. In an embodiment, the graphical user interface may include radio buttons against the recommendations, which may be clicked using a mouse button to choose the preferred one or more recommendations. At step 802, a determination is made if an input is received from the user on the recommendations. If the recommendations are received from the user, at step 803, the preferred recommendations are implemented in the technical installation 107 to improve the real-time quality of the product. If user input on recommendations are not received, at step 804, one or more parameters affecting the quality associated with the product are identified based on a recipe associated with the product. The recipe includes data associated with one or more raw materials/ingredients required for the manufacturing process, one or more parameters associated with the manufacturing process, steps to be followed for the manufacturing of the product, one or more components involved in the manufacturing process, etc. The recipe associated with the manufacturing process may be stored in the technical database 112. The one or more parameters in the recipe may be compared with the real-time one or more parameters associated with the manufacturing process to determine factors that may affect the quality associated with the product. The method 800 further includes a step 805 of dynamically reconfiguring at least a portion of the technical installation 107 based on the determined parameters affecting the quality of the product. In an embodiment, reconfiguration of the at least portion of the technical installation 107 includes modifying one or more parameters associated with the manufacturing process. Such one or more parameters may include quantity of the ingredients/raw materials, physical parameters such as temperature, pressure, humidity, flow, etc., time duration of an act associated with the manufacturing process, etc. Once the at least one portion of the technical installation 107 has been reconfigured, the manufacturing process is continued at step 806 to manufacture the product.

In an embodiment, the computed quality associated with the product based on the one or more real-time parameters may be a basis for identification of one or more vendors for the raw materials/ingredients to be used in the manufacturing process. Such computed quality may be dependent on the quality of the raw materials/ingredients used in the manufacturing process. In the embodiment, the quality associated with the raw material/ingredients may be stored using blockchain. Each node in the blockchain may contain a copy of the entire blockchain and may compete to mine the next block or validate a transaction. Whenever a new block is added, the blockchain is updated and is propagated to the entire blockchain network. Therefore, modification of data associated with the quality is prevented. If the quality associated with the raw materials/ingredients meets a defined quality standard, one or more vendors associated with the raw materials/ingredients may be identified. Such one or more vendors may be recommended to the user of the technical installation 107 for procurement of raw materials/ingredients for the manufacturing process. In a further embodiment, a smart contract may be executed with the one or more recommended vendors for procurement of the raw materials/ingredients.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

### List of reference numbers

100 System for management of a manufacturing process in a technical installation
102 Cloud platform
104A-N Devices
106A-N Sensors
108 User device
110 Process control module
112 Technical database
114 Network interface
116A-F Communication links
120A-N Communication interfaces
201 Processing unit
202 Memory
203 Storage unit
207 Bus
300 Method of managing a manufacturing process in a technical installation
400 Method of computing the quality associated with the product
500 Method of determining one or more parameters affecting the quality associated with the product
600 Method of dynamically reconfiguring at least one portion of the technical installation
700 Method of managing a manufacturing process in a technical installation
800 Method of manufacturing the product based on the recommendations

## Claims

1. A method (300) of managing a manufacturing process in a technical installation (107), the method (300) comprising:
receiving one or more real-time parameters associated with at least one portion of the manufacturing process from one or more sensors (106A-N) deployed in the technical installation (107), wherein the manufacturing process corresponds to manufacturing of a product using the technical installation (107);
computing a quality associated with the product by analyzing the one or more real-time parameters associated with the at least one portion of the manufacturing process;
determining one or more parameters affecting the quality associated with the product based on a recipe associated with the product;
dynamically reconfiguring at least a portion of the technical installation based on the determined parameters affecting the quality associated with the product; and
manufacturing the product using the manufacturing process upon reconfiguring the at least one portion of the technical installation (107).

2. The method (300) according to claim 1, wherein computing the quality associated with the product comprises:
simulating the one or more real-time parameters associated with the at least one portion of the manufacturing process; and
determining an outcome of the at least one manufacturing process based on the simulated one or more real-time parameters, wherein the outcome corresponds to the quality associated with the product.

3. The method (300) according to claim 1, wherein determining one or more parameters affecting the quality associated with the product comprises:
receiving the recipe associated with the product;
comparing one or more parameters associated with the recipe with the one or more real-time parameters associated with the at least one portion of the manufacturing process;
identifying if the one or more real-time parameters associated with the at least one portion of the manufacturing process deviates from the one or more parameters associated with the recipe; and
determining the one or more parameters affecting the quality associated with the product based on the identified deviation.

4. The method (300) according to claim 1, wherein dynamically reconfiguring the at least one portion of the technical installation (107) comprises:
simulating the one or more parameters associated with the recipe;
determining an expected quality associated with the product based on the simulation;
identifying if the at least one portion of the technical installation is to be reconfigured based on the expected quality associated with the product; and
reconfiguring the at least one portion of the technical installation (107), if the at least one portion of the technical installation (107) is to be reconfigured.

5. The method (300) according to claim 4, further comprising:
simulating the reconfigured parameters associated with the at least one reconfigured portion of the technical installation (107);
determining an outcome of the simulation of the reconfigured parameters, wherein the outcome corresponds to reconfigured quality of the product;
determining if the reconfigured quality meets the expected quality associated with the recipe of the product;
if the reconfigured quality does not meet the expected quality associated with the recipe, dynamically reconfiguring the at least one portion of the technical installation (107).

6. The method (300) according to claim 2, further comprising providing one or more recommendations to manage the quality associated with the product based on the determined outcome of the simulation of the one or more real-time parameters associated with the manufacturing process.

7. The method (300) according to any of the abovementioned claims wherein the manufacturing process corresponds to a manufacturing process in a food and beverages industry.

8. The method (300) according to claims 1 to 6, wherein the manufacturing process corresponds to a manufacturing process in a pharmaceutical industry.

9. The method (300) according to claims 1 and 6, wherein the manufacturing process corresponds to a manufacturing process in a chemical industry.

10. A system (100) for managing a manufacturing process in a technical installation (107), the system (100) comprising:
one or more processing units (201);
a technical database (112); and
a memory (202) communicatively coupled to the one or more processing units (201), the memory (202) comprising a process control module (110) configured to perform the method steps as claimed in claims 1 to 9.

11. A system (100) comprising:
one or more servers (102) remotely located from a technical installation (107);
one or more sensors (106A-D) communicatively coupled to the one or more servers (102); and
one or more user devices communicatively coupled to the one or more servers (102), wherein the one or more servers (102) comprise computer readable instructions, which when executed by the one or more servers (102) cause the one or more servers (102) to perform the method according to claims 1 to 9.

12. A process control system for operation of a manufacturing process plant, the process control system comprising a system according to claim 10.

13. A computer program product comprising machine readable instructions, that when executed by a processing unit (201), cause the processing unit (201) to perform a method according to claims 1-9.

14. A computer readable medium on which program code sections of a computer program are saved, the program code sections being loadable into and/or executable in a system to make the system execute the method of any one of the claims 1 to 9 when the program code sections are executed in the system.
